(19) Europäisches Patentamt
European Patent Office
Office européen des brevets

(11) EP 0 943 640 A1

(12) **EUROPEAN PATENT APPLICATION**
published in accordance with Art. 158(3) EPC

(43) Date of publication:
**22.09.1999 Bulletin 1999/38**

(21) Application number: **98945619.9**

(22) Date of filing: **05.10.1998**

(51) Int. Cl.$^6$: **C08G 63/193**, C08J 5/18

(86) International application number:
**PCT/JP98/04495**

(87) International publication number:
**WO 99/18141 (15.04.1999 Gazette 1999/15)**

(84) Designated Contracting States:
**AT DE FR GB IT**

(30) Priority: **03.10.1997 JP 27090297**
**03.02.1998 JP 3667598**
**09.03.1998 JP 7492198**

(71) Applicant: **UNITIKA LTD.**
**Amagasaki-shi, Hyogo 660-0824 (JP)**

(72) Inventors:
- **FUJIWARA, Masaaki**
  **Uji-shi, Kyoto 611-0000 (JP)**
- **KISHIMOTO, Soichiro**
  **Uji-shi, Kyoto 611-0000 (JP)**
- **OHWAKI, Takamasa**
  **Uji-shi, Kyoto 611-0000 (JP)**
- **TAKAGI, Shinya**
  **Uji-shi, Kyoto 611-0000 (JP)**
- **SATOH, Mitsunobu**
  **Uji-shi, Kyoto 611-0000 (JP)**
- **HAMADA, Tomohiro**
  **Uji-shi, Kyoto 611-0000 (JP)**
- **HASEGAWA, Akihiko**
  **Uji-shi, Kyoto 611-0000 (JP)**

(74) Representative:
**Benson, John Everett**
**J. A. Kemp & Co.,**
**14 South Square,**
**Gray's Inn**
**London WC1R 5LX (GB)**

# (54) HIGHLY HEAT-RESISTANT, HIGH-PURITY POLYARYLATE AND FILM PRODUCED FROM THE SAME

(57) The present invention provides a polyarylate film comprising 9,9-bis(alkyl-4-hydroxyphenyl)fluorene residue and bisphenol residue with a molar ratio of the former of in the range of 0.05 to 1 in which the carboxylic acid component is composed of terephthalic acid residue and isophthalic acid residue, wherein the polyarylate film having good abrasion resistance and heat resistance, being highly transparent and having less incident-angle dependent birefringence can be obtained by solvent casting of a polyarylate solution with an inherent viscosity in the range of 0.25 to 2.50. The film has high abrasion resistance, heat resistance and purity along with being excellent in such optical characteristics as high transparency and low birefringence, which is applicable as molding materials for use in electric, electronic and optical fields and in automobile industry; as insulating materials in electric appliances, power generators, capacitors and interlayer insulators; and as surface coating films as dielectric films for use in transformers, wire coating and capacitors, and substrates for liquid crystal display panel.

EP 0 943 640 A1

## Description

### Technical Field

The present invention relates to a novel polyarylate with high heat-resistance and high purity containing specified bifunctional phenol units, and a film using the polyarylate. In more detail, the present invention relates to a novel polyarylate being excellent in heat-resistance, abrasion resistance and optical characteristics, which can be used for electric and electronic materials, automobile members, coating materials and films.

### Background Art

An amorphous polyarylate comprising 2,2-bis(4-hydroxyphenyl)propane (abbreviated as bisphenol A hereinafter) residue and terephthalic acid and isophthalic acid residues is known in the art as an engineering plastic. Molded members of the amorphous polyarylate as described above can be widely used in the fields of electric and electronic appliances, automobile members and mechanical members since the polymer has high heat-resistance and is excellent in mechanical strength as represented by impact strength and in dimensional stability besides being amorphous and transparent.

Polyarylate resin made of bisphenol A is used for electronic components such as a capacitor film by taking advantage of its good solubility in various kinds of solvents, excellent electrical characteristics (such as insulation property and dielectric property) and abrasion resistance. The resin is also used for various kind of liquid crystal display films and as a coating resin for forming coating films by taking advantage of its transparency and scratch resistance.

However, while demands for optical characteristics of films, and for mechanical characteristics such as abrasion resistance, heat resistance and optical characteristics of the resin for forming a coating film have been tightened up more and more, characteristics of bisphenol A polyarylate for complying with such requirements may be sometimes insufficient depending on its application field. Therefore, resins being excellent in these required characteristics are desired. A polyarylate composed of 9,9-bis(3-methyl-4-hydroxyphenyl)fluorene residue and isophthalic acid residue is reported in Journal of Applied Polymer Science, Vol. 29, p35 to 43 (1984) as a resin capable of solving these problems. However, because the carboxylic acid component of the resin described in this report is composed of merely isophthalic acid, the resulting resin becomes so fragile that its mechanical characteristics such as abrasion resistance of films and coating films are currently insufficient yet for solving the foregoing problems. A polyarylate comprising 9,9-bis(4-hydroxyphenyl)fluorene residue and terephthalic acid and isophthalic acid residues is disclosed, on the other hand, in Japanese Unexamined Patent Publication No. 57-192432. However, the color of the resin is readily turned to yellowish by UV irradiation owing to its structure of diphenol components, making it difficult to develop the resin for optical applications. Meanwhile use of a polyarylate comprising bifunctional phenol residues having 1,1-fluorene groups and terephthalic acid and/or isophthalic acid is suggested in Japanese Unexamined Patent Publication No. 8-134336, merely use of bisphenol A, alkyl substituted bisphenol A, bis(4-hydroxy-3-methylphenyl)sulfide, 1,1-bis(4-hydroxyphenyl)cyclohexane or 1,1-bis(4-hydroxyphenyl)-3,3,5-cyclohexylene is actually disclosed in its embodiment and mechanical characteristics such as abrasion resistance are neither disclosed nor suggested, implying some problems in its abrasion resistance.

Resins to be used for a liquid crystal display, a substrate for use in an electroluminescence display, a transparent conductive film of a polarizer, and a surface protection film of an optical disc and optical card are required to be highly transparent and maintain optical isotropy irrespective of incident angle of light (causing no birefringence). However, conventional bisphenol A polyarylate and polycarbonate can not meet this requirement.

A glass or a metal is used for the substrate in optoelectronic elements such as a liquid crystal display element and photovoltaic element for solar cells, and electric and electronic elements such as a capacitor. However, mechanical strength and specific gravity of the glass substrate are preventing the element to have a long life span and to be lightweight. On the other hand, machining of the metal substrate is difficult besides it has a high specific gravity, thereby making it difficult for the element to be compact and lightweight. Plastic substrates have been urgently desired for solving the problems as hitherto described. However, no plastic substrate was found having heat resistance at a temperature of 200°C or more (a required process temperature for forming the element) as well as a small birefringence.

Lowering or deterioration of electrical characteristics of the resin is an another problem in the foregoing application fields since many additives and unreacted substances may be left behind during the production process of the polymer materials. Accordingly, materials containing less impurities are desired.

The present invention for solving the problems as hitherto described provides a novel polyarylate and a film thereof, in which required performances such as high abrasion resistance, high transparency, low degree of birefringence, high heat-resistance and high purity are satisfied altogether, although these performances of conventional bisphenol A polyarylate are insufficient.

Disclosure of Invention

Through intensive studies to solve the problems as hitherto described, the inventors of the present invention found that a novel polyarylate containing, among the components constituting the polyarylate, 9,9-bis(3-methyl-4-hydroxyphenyl)fluorene as a bifunctional phenol and terephthalic acid and isophthalic acid as dicarboxylic components has excellent transparency and heat resistance, and a low degree of birefringence, thereby completing the present invention.

In the first aspect, the present invention provides a polyarylate comprising:

a bifunctional phenol component being composed of

(a) a 9,9-bis(alkyl-4-hydroxyphenyl)fluorene residue represented by a general formula (1)

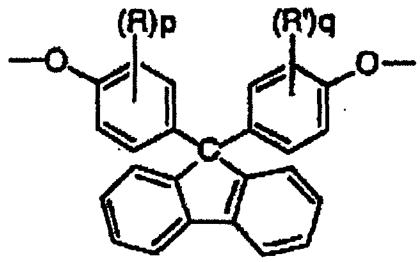

(1)

(wherein R and R' in the formula are selected from alkyl groups having a carbon number of 1 to 4, p and q representing an integer of 1 to 4); and

(b) a bifunctional phenol residue represented by a general formula (2) and/or a dioxybenzene residue that are added if necessary,

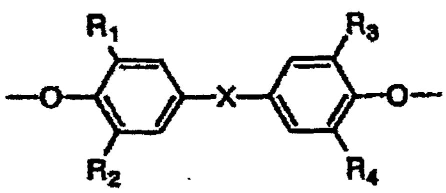

(2)

(wherein $R_1$, $R_2$, $R_3$ and $R_4$ in the formula are each independently selected from the group consisting of a hydrogen atom, a halogen atom, a hydrocarbon group or a nitro group, the hydrocarbon group being selected from the group consisting of aliphatic groups having a carbon number of 1 to 20, alicyclic groups having a carbon number of 3 to 20 and aromatic groups having a carbon number of 6 to 20, X being selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyalkylidene group, a substituted phenyalkylidene group, a carbonyl group, a sulfonyl group, a carboxylalkylene group, a carboxylalkylidene group, an alkoxycarbonyl alkylene group, an alkoxycarbonyl alkylidene group, a fluorene group, an isatin group, an alkylsilane group and a dialkylsilane group), wherein

the mole fraction between (a) and (b) is within the range represented by the following relation:

$$0.05 \le [(a)/\{(a) + (b)\}] \le 1.00;\ \text{and}$$

a dicarboxylic acid component being composed of 10 to 90 mol% of a terephthalic acid residue and 90 to 10 mol% of an isophthalic acid residue; and

an inherent viscosity ($\eta$ inh.) at 25°C of a solution of the polyarylate with a concentration of 1.0 g/dl in 1,1,2,2-tetrachloroethane as a solvent is within the range represented by the following relation:

$$0.25 \leq \eta \text{ inh.} \leq 2.50.$$

In the second aspect, the present invention provides a polyarylate comprising:

a bifunctional phenol component being composed of

(c) a 9,9-bis(3,5-dimethyl-4-hydroxyphenyl)fluorene residue represented by a chemical formula (3); and

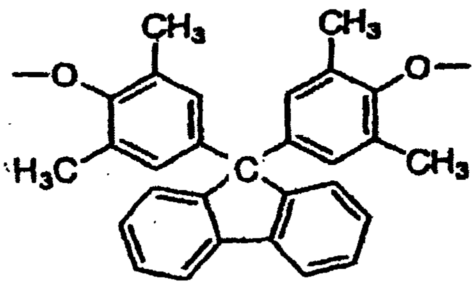

(3)

(b) a bifunctional phenol residue represented by a general formula (2) and/or a dioxybenzene residue that are added if necessary,

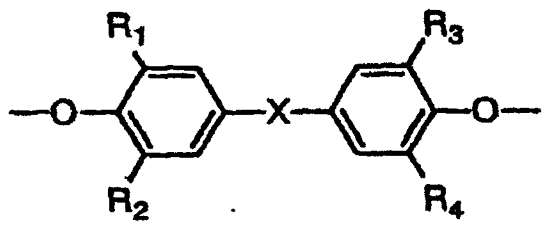

(2)

(wherein $R_1$, $R_2$, $R_3$ and $R_4$ in the formula are each independently selected from the group consisting of a hydrogen atom, a halogen atom, a hydrocarbon group or a nitro group, the hydrocarbon group being selected from the group consisting of aliphatic groups having a carbon number of 1 to 20, alicyclic groups having a carbon number of 3 to 20 and aromatic groups having a carbon number of 6 to 20, X being selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyalkylidene group, a substituted phenyalkylidene group, a carbonyl group, a sulfonyl group, a carboxylalkylene group, a carboxylalkylidene group an alkoxycarbonyl alkylene group, an alkoxycarbonyl alkylidene group, a fluorene group, an isatin group, an alkylsilane group and a dialkylsilane group.), wherein

the mole fraction between (c) and (b) is within the range represented by the following relation:

$$0.05 \leq [(c)/\{(c) + (b)\}] \leq 1.00; \text{ and}$$

a dicarboxylic acid component being composed of 10 to 90 mol% of a terephthalic acid residue and 90 to 10 mol% of an isophthalic acid residue; and
an inherent viscosity ($\eta$ inh.) at 25°C of a solution of the polyarylate with a concentration of 1.0 g/dl in 1,1,2,2-tetrachloroethane as a solvent is within the range represented by the following relation:

$$0.25 \leq \eta \text{ inh.} \leq 2.50.$$

The third aspect of the present invention relates to the polyarylate according to the second aspect of the present invention wherein the inherent viscosity ($\eta$ inh.) is within the following range:

$$0.25 \leq \eta \text{ inh.} \leq 1.50.$$

In the fourth aspect, the present invention provides a polyarylate comprising:

a bifunctional phenol component being composed of

(d) a 9,9-bis(3-methyl-4-hydroxyphenyl)fluorene residue represented by a chemical formula (4); and

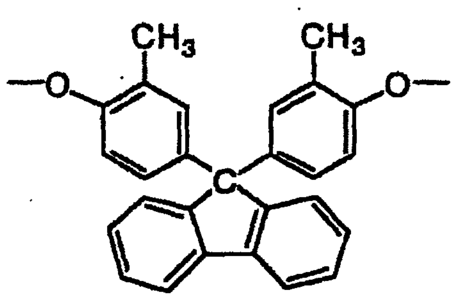

(4)

(b) a bifunctional phenol residue represented by a general formula (2) and/or a dioxybenzene residue that are added if necessary,

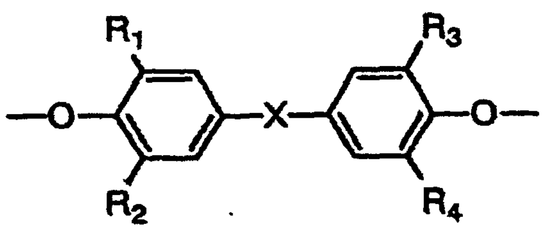

(2)

(wherein $R_1$, $R_2$, $R_3$ and $R_4$ in the formula are each independently selected from the group consisting of a hydrogen atom, a halogen atom, a hydrocarbon group or a nitro group, the hydrocarbon group being selected from the group consisting of aliphatic groups having a carbon number of 1 to 20, alicyclic groups having a carbon number of 3 to 20 and aromatic groups having a carbon number of 6 to 20, X being selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyalkylidene group, a substituted phenyalkylidene group, a carbonyl group, a sulfonyl group, a carboxylalkylene group, a carboxylalkylidene group, an alkoxycarbonyl alkylene group, an alkoxycarbonyl alkylidene group, a fluorene group, an isatin group, an alkylsilane group and a dialkylsilane group.), wherein

the mole fraction between (d) and (b) is within the range represented by the following relation:

$$0.05 \leq [(d)/\{(d) + (b)\}] \leq 1.00; \text{ and}$$

a dicarboxylic acid component being composed of 10 to 90 mol% of a terephthalic acid residue and 90 to 10 mol% of an isophthalic acid residue; and
an inherent viscosity (η inh.) at 25°C of a solution of the polyarylate with a concentration of 1.0 g/dl in 1,1,2,2-tetrachloroethane as a solvent is within the range represented by the following relation:

$$0.25 \leq \eta \text{ inh.} \leq 1.50.$$

In the fifth aspect, the present invention provides a polyarylate comprising:

a bifunctional phenol component being composed of

(d) a 9,9-bis(3-methyl-4-hydroxyphenyl)fluorene residue represented by a chemical formula (4); and

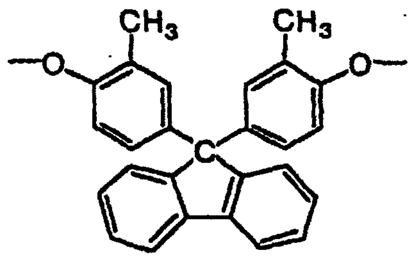

(4)

(f) a 2,2-bis(3,5-dimethyl-4-hydroxyphenyl)propane residue represented by a chemical formula (5) that is added if necessary,

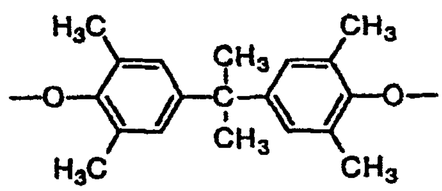

(5)

wherein

the mole fraction between (d) and (f) is within the range represented by the following relation:

$$0.30 < [(d)/\{(d) + (f)\}] \leq 1.00,$$ and

a dicarboxylic acid component being composed of 10 to 90 mol% of a terephthalic acid residue and 90 to 10 mol% of an isophthalic acid residue; and
an inherent viscosity ($\eta$ inh.) at 25°C of a solution of the polyarylate with a concentration of 1.0 g/dl in 1,1,2,2-tetrachloroethane as a solvent is within the range represented by the following relation:

$$0.25 \leq \eta \text{ inh.} \leq 2.50.$$

The sixth aspect of the present invention relates to the polyarylate according to any one of the first to the fifth aspects of the present invention having a carboxyl value of 30 mole/ton or less and the residual quantity of alkali metals of less than 50 ppm.
The seventh aspect of the present invention relates to the polyarylate according to any one of the first to sixth aspects of the present invention containing less than 200 ppm of the residual catalysts.
The eighth aspect of the present invention relates to the polyarylate according to any one of the first to seventh aspects of the present invention containing 1000 ppm or less of the residual phenyl monomers and dicarboxylic acids, respectively.
The ninth aspect of the present invention relates to a film produced by forming the polyarylate according to any one of the first to eighth aspects of the present invention.
The tenth aspect of the present invention relates to a film formed by a solvent casting method of the polyarylate according to any one of the first to eighth aspects of the present invention by a solvent casting method.
The 11th aspect of the present invention relates to the polyarylate film according to the tenth aspect of the present invention containing 1000 ppm or less of the residual phenyl monomer and dicarboxylic acids, respectively.
The 12th aspect of the present invention relates to the polyarylate film according to the 10th or 11th aspects

of the present invention containing less than 2000 ppm of the residual solvent.

Details of the present invention will be described hereinafter.

Best Mode for Carrying Out the Invention

The bifunctional phenol component in the polyarylate according to the present invention comprises (a) the 9,9-bis(alkyl-4-hydroxyphenyl)fluorene residue represented by the foregoing general formula (1) and (b) the bifunctional phenol residue represented by the foregoing general formula (2) and/or a dioxybenzene residue that are added if necessary, wherein the molar fraction between (a) and (b) is within the range represented by the following relation;

$$0.05 \leq [(a)/\{(a) + (b)\}] \leq 1.00$$

or preferably within the range represented by the following relation:

$$0.25 \leq [(a)/\{(a) + (b)\}] \leq 1.00$$

It is not preferable that the molar fraction of the 9,9-bis(alkyl-4-hydroxyphenyl)fluorene residue represented by the formula (1) is less than 0.05 because the effects for improving heat resistance of the polyarylate and for reducing birefringence are not displayed, thus failing to obtain the effect of the present invention.

R and R' in the general formula (1) are selected from alkyl groups with a carbon number of 1 to 4, p and q representing an integer from 1 to 4. $R_1$, $R_2$, $R_3$ and $R_4$ in the general formula (2) are selected, respectively, from the group consisting of a hydrogen atom, a halogen atom, hydrocarbon groups and a nitro group, and the hydrocarbon group is selected from the group consisting of aliphatic groups with a carbon number of 1 to 20, alicyclic groups with a carbon number of 3 to 20 and aromatic groups with a carbon number of 6 to 20. X is selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyl alkylidene group, a substituted phenyl alkylidene group, a carbonyl group, a sulfonyl group, a carboxyalkylene group, a carboxyalkylidene group, an alkoxycarbonyl alkylene group, an alkoxycarbonyl alkylidene group, a fluorene group, an isatin group, an alkylsilane group and a dialkylsilane group.

Examples of the compounds having the bifunctional phenol residue represented by the general formula (2) that can be used for the polyarylate according to the present invention are; bis(4-hydroxyphenyl)methane, 1,1-bis(4-hydroxyphenyl) ethane, bis(4-methyl-2-hydroxyphenyl)methane, bis(3,5-dimethyl-4-hydroxyphenyl)methane, 1,1-bis(4-hydroxyphenyl) cyclohexane, 2,2-bis(4-hydroxyphenyl)-4-methylpentane, 2,2-bis(4-hydroxyphenyl)propane (bisphenol A), 2,2-bis(3-methyl-4-hydroxyphenyl)propane, 2,2-bis(3,5-dimethyl-4-hydroxyphenyl) propane, 1,1-bis(4-hydroxyphenyl)-1-phenylethane, 1,1-bis(4-hydroxyphenyl)-2-ethylhexane, 2,2-bis(3-phenyl-4-hydroxyphenyl)propane, bis(3-methyl-4-hydroxyphenyl)methane, 4,4'-biphenol, 2,2-bis(4-hydroxyphenyl)butane, 1,1-bis(4-hydroxyphenyl)-2-methylpropane, bis(4-hydroxyphenyl)-phenylmethane, 2,2-bis(4-hydroxyphenyl)octane, 1,1-bis(3-methyl-4-hydroxyphenyl)cyclohexane, 2,2-bis(3-allyl-4-hydroxyphenyl)propane, 2,2-bis(3-isopropyl-4-hydroxyphenyl) propane, 2,2-bis(3-tert-butyl-4-hydroxyphenyl)propane, 2,2-bis(3-sec-butyl-4-hydroxyphenyl)propane, bisphenol fluorene, 1,1-bis(2-methyl-4-hydroxy-5-tert-butylphenyl)-2-methylpropane, 4,4'-[1,4-phenylene-bis(2-propylidene)]-bis(2- methylphenol), 1,1-bis(3-phenyl-4-hydroxyphenyl)cyclohexane, 4,4'-dihydroxyphenyl ether, bis(2-hydroxyphenyl)methane, 2,4'-methylenebisphenol, bis(3-methyl-4-hydroxyphenyl)methane, 1,1-bis(4-hydroxyphenyl)propane, 1,1-bis(2-hydroxy-5-methylphenyl) ethane, 1,1-bis(4-hydroxyphenyl)-3-methylbutane, bis(2-hydroxy-3,5-dimethylphenyl)methane, 1,1-bis(4-hydroxyphenyl) cyclopentane, 1,1-bis(3-methyl-4-hydroxyphenyl)cyclopentane, 3,3-bis(4-hydroxyphenyl)pentane, 3,3-bis(3-methyl-4-hydroxyphenyl)pentane, 3,3-bis(3,5-dimethyl-4-hydroxyphenyl) pentane, 2,2-bis(2-hydroxy-3,5-dimethylphenyl)propane, 2,2-bis(4-hydroxyphenyl)nonane, 1,1-bis(3-methyl-4-hydroxyphenyl)-1-phenylethane, 1,1-bis(3,5-dimethyl-4-hydroxyphenyl) cyclohexane, 2,2-bis(4-hydroxyphenyl)decane, 1,1-bis(4-hydroxyphenyl)decane, bis(2-hydroxy-3-tert-butyl)-5-methylphenyl)methane, bis(4-hydroxyphenyl)diphenylmethane, terpene diphenol, 1,1-bis(3-tert-butyl-4-hydroxyphenyl) cyclohexane, 1,1-bis(2-methyl-4-hydroxy-5-tert-butylphenyl)-2-methylpropane, 2,2-bis(3-cyclohexyl-4-hydroxyphenyl)propane, bis(3,5-di-tert-butyl-4-hydroxyphenyl)methane, bis(3,5-di-sec-butyl-4-hydroxyphenyl) methane, 1,1-bis(3-cyclohexyl-4-hydroxyphenyl)cyclohexane, 1,1-bis(2-hydroxy-3,5-di-tert-butylphenyl)ethane, bis(3-nonyl-4-hydroxyphenyl)methane, 2,2-bis(3,5-di-tert-butyl-4-hydroxyphenyl)propane, bis(2-hydroxy-3,5-di-tert-butyl-6-methylphenyl)methane, 1,1-bis(3-phenyl-4-hydroxyphenyl)-1-phenylethane, 4,4-bis(4-hydroxyphenyl) pentanoic acid, bis(4-hydroxyphenyl)acetic acid butyl ester, bis(3-fluoro-4-hydroxyphenyl)methane, bis(2-hydroxy-5-fluorophenyl)methane, 2,2-bis(4-hydroxyphenyl)-1,1,1,3,3,3- hexafluoropropane, 2,2-bis(3-fluoro-4-hydroxyphenyl)propane, his(3-fluoro-4-hydroxyphenyl)phenylmethane, bis(3-fluoro-4-hydroxyphenyl). (p-fluorophenyl)methane, bis(4-hydroxyphenyl)-(p-fluorophenyl)methane, 2,2-bis(3-chloro-4-hydroxy-5-methylphenyl)propane, 2,2-bis(3,5-dichloro-4-hydroxyphenyl) propane, 2,2-bis(3-chloro-4-hydroxyphenyl)propane, bis (3,5-dibromo-4-hydroxyphenyl)methane, 2,2-bis(3,5-dihromo-4-hydroxyphenyl)propane, 2,2-bis(3-nitro-4-hydroxyphenyl) propane, 3,3'-dimethyl-4,4'-biphenol, 3,3',5,5'-tetramethyl-4,4'-biphenol, 3,3',5,5'-tetra-tert-butyl-4,4'-biphenol, bis(4-hydroxyphenyl)ketone, 3,3'-difluoro-4,4'-biphenol, 3,3'5,5'-tetrafluoro-4,4'-biphenol, bis(4-hydroxyphenyl) dimethylsilane, bis(4-hydroxyphenyl)sulfone, bis(3-methyl-4-hydroxyphenyl)sulfone, his (3,5-dimethyl-4-hydroxyphenyl) sulfone, bis(3,5-dibromo-4-hydroxyphenyl)sulfone, bis (4-hydroxyphenyl)thioether, bis(3-methyl-4-hydroxyphenyl)ether, bis(3-methyl-4-hydroxyphenyl)thioether, bis(3,5-dimethyl-4-hydroxyphenyl) ether, bis(3,5-dimethyl-4-hydroxyphenyl) thioether, bis(2,3,5-trimethyl-4-hydroxyphenyl)phenylmethane, 2,2-bis(4-hydroxyphenyl)dodecane, 2,2-bis(3-methyl-4-hydroxyphenyl)dodecane, 2,2-bis(3,5-dimethyl-4-hydroxyphenyl) dodecane, 1,1-bis(3-tert-butyl-4-hydroxyphenyl)-1-phenylethane, 1,1-bis(3,5-di-tert-butyl-4-hydroxyphenyl)-1-phenylethane, 1,1-bis(2-methyl-4-hydroxy-5-cyclohexylphenyl)-2-methylpropane, 1,1-bis(2-hydroxy-3,5-di-tert-butylphenyl) ethane, 2,2-bis(4-hydroxyphenyl)propanoic acid methyl ester, 2,2-bis(-4-hydroxyphenyl)propanoic acid ethyl ester, isatin bisphenol, isatin biscresol, 2,2' ,3,3', 5,5'-hexamethyl-4,4'-biphenol, bis (2-hydroxyphenyl)methane, 2,4'-methylene bisphenol, 1,2-bis(4-hydroxyphenyl)ethane, 2-(4-hydroxyphenyl) -2-(2-hydroxyphenyl)propane, bis (2-hydroxy-3-allylphenyl) methane, 1,1-bis(2-hydroxy-3,5-dimethylphenyl)-2-methylpropane, 1,1-bis(2-hydroxy-5-tert-butylphenyl)ethane, bis(2-hydroxy-5-phenylphenyl)methane, 1,1-bis(2-methyl-4-hydroxy-5-tert-butylphenyl)butane, bis (2-methyl-4-hydroxy-5-cyclohexylphenyl)methane, 2,2-bis(4-hydroxyphenyl)pentadecane, 2,2-bis(3-methyl-4-hydroxyphenyl)pentadecane, 2,2-bis(3,5-dimethyl-4-hydroxyphenyl)pentadecane, 1,2-bis(3,5-di-tert-butyl-4-hydroxyphenyl)ethane, bis(2-hydroxy-3,5-di-tert-butylphenyl)methane, 2,2-bis(3-styryl-4-hydroxyphenyl)propane, 1,1-bis(4-hydroxyphenyl)-1-(p-nitrophenyl)ethane, bis(3,5-difluoro-4-hydroxyphenyl)methane, bis(3,5-difluoro-4-hydroxyphenyl)phenylmethane, bis (3,5-difluoro-4-hydroxyphenyl) diphenylmethane, bis(3-fluoro-4-hydroxyphenyl) diphenylmethane, 2,2-bis(3-chloro-4-hydroxyphenyl)propane, 3,3',5,5'-tetra-tert-butyl-2,2'-biphenol, 2,2'-diallyl-4,4'-biphenol, 1,1-bis(4-hydroxyphenyl)-3,3,5-trimethylcyclohexane, 1,1-bis(4-hydroxyphenyl)-3,3,5,5-tetramethylcyclohexane, 1,1-bis(4-hydroxyphenyl)-3,3,4-trimethylcyclohexane, 1,1-bis(4-hydroxyphenyl)-3,3-dimethyl-5-ethylcyclohexane, 1,1-bis(4-hydroxyphenyl)-3,3,5-trimethylcyclopentane, 1,1-bis(3,5-dimethyl-4-hydroxyphenyl)-3,3,5-trimethylcyclohexane, 1,1-bis(3,5-diphenyl-4-hydroxyphenyl)-3,3,5-trimethylcyclohexane, 1,1-bis(3-methyl-4-hydroxyphenyl)-3,3,5-trimethylcyclohexane, 1,1-bis(3-phenyl-4-hydroxyphenyl)-3,3,5-trimethylcyclohexane, 1,1-bis(3,5-dichloro-4-hydroxyphenyl)-3,3,5-trimethyl cyclohexane, 9,9-bis(4-hydroxyphenyl)fluorene, 9,9-bis(3-methyl-4-hydroxyphenyl)fluorene, 9,9-bis(3,5-dimethyl-4-hydroxyphenyl)fluorene, and 1,1-bis(3,5-dibromo-4-hydroxyphenyl) -3,3,5-trimethylcyclohexane.

Examples of the dihydroxybenzene include resorcinol, hydroquinone and 1,2-dihydroxybenzene.

Not only one kind of these compounds hut also two or more of them may be used for copolymerization. The bifunctional phenol to be advantageously used for the constituting component (b) of polyarylate includes 2,2-bis (4-hydroxyphenyl) propane (bis phenol A).

The bifunctional phenol component of the polyarylate according to the fifth aspect of the present invention comprises (d) the 9,9-bis(3-methyl-4-hydroxyphenyl)fluorene residue represented by the chemical formula (4) and (f) the 2,2-bis(3,5-dimethyl-4-hydroxyphenyl)propane residue represented by the chemical formula (5) that is added if necessary, wherein the molar fraction between (d) and (f) is within the range of;

$$0.30 < [(d)/\{(d) + (f)\}] \leq 1.00$$

(or preferably within the range of:

$$0.50 \leq [(d)/\{(d) + (f)\}] \leq 1.00$$

It is preferable from the view point of optical characteristics that the 2,2-bis(3,5-dimethyl-4-hydroxyphenyl) propane residue represented by the chemical formula (5) is involved in polymerization, by which yellowish color change of polyarylate due to UV irradiation could be suppressed. However, it is not preferable that the molar ratio of the 9,9-bis(3-methyl-4-hydroxyphenyl)fluorene residue represented by the chemical formula (4) is 0.30 or less, or the molar ratio of the 2,2-bis(3,5-dimethyl-4-hydroxyphenyl)propane residue represented by the chemical formula (5) is 0.70 or more, since the effects for improving heat resistance of polyarylate and for decreasing birefringence could not be displayed besides the degree of yellowish change becomes large.

The dicraboxylic acid component that constitute the polyarylate according to the present invention is composed of 10 to 90 mol% of the terephthalic acid residue and 90 to 10 mol% of the isophthalic acid residue, an equimolar mixture of terephthalic acid and isophthalic acid being especially preferable.

While the dicarboxylic acid component is composed of the terephthalic acid residue and isophthalic acid residue, a dicarboxylic acid component other than those can he used as a copolymerization component in the range not to hinder the object and effect of the present invention.

The quantity of use of the copolymerizable bifunctional carboxylic acid component is determined according to its required characteristics.

Examples of the copolymerizable dicarboxylic acid component include aromatic dicarboxylic acids such as

orthophthalic acid, 2,6-naphthalene dicarboxylic acid, diphenic acid, 4,4'-dicarboxydiphenylether, bis(p-carboxyphenyl)alkane and 4,4'-dicarboxyphenyl sulfone, and aliphatic dicarboxylic acid such as oxalic acid, malonic acid, succinic acid and adipic acid. These divalent carboxylic acid can be used alone or in combination of two or more of them.

The polyarylate according to the present invention should not he always a linear polyarylate but may he prepared by copolymerization of polyfunctional phenols. The quantity of use of the polyfunctional phenols may be determined depending on the required characteristics of the polymer.

Examples of these polyfunctional phenols include tris(4-hydroxyphenyl)methane, 4,4'-[1-[4-[1-(4-hydroxyphenyl)-1-methyethyl]phenyl]ethylidene]bisphenol, 2,3,4,4'-tetrahydroxy benzophenone, 4-[bis(4-hydroxyphenyl)methyl]-2-methoxyphenol, tris(3-methyl-4-hydroxyphenyl)methane, 4-[bis(3-methyl-4-hydroxyphenyl)methyl]-2-methoxyphenol, 4-[bis(3,5-dimethyl-4-hydroxyphenyl)methyl-2-methoxyphenol, 1,1,1-tris(4-hydroxyphenyl)ethane, 1,1,1-tris(3-methyl-4-hydroxyphenyl) ethane, 1,1,1-tris(3,5-dimethyl-4-hydroxyphenyl)ethane, tris(3-methyl-4-hydroxyphenyl)methane, tris(3,5-dimethyl-4-hydroxyphenyl)methane, 2,6-bis[(2-hydroxy-5-methylphenyl) methyl]-4-methylphenol, 4-[bis(3,5-dimethyl-4-hydroxyphenyl) methyl]-1,2-dihydroxybenzene, 2-[bis(2-methyl-4-hydroxy-5-cyclohexylphenyl)methyl]phenol, 4-[bis(2-methyl-4-hydroxy-5-cyclohexylphenyl)methyl]-1,2-dihydroxybenzene, 4-methylphenyl-1,2,3-trihydroxybenzene, 4-[(4-hydroxyphenyl)methyl]-1,2,3- trihydroxybenzene, 4-[1-(4-hydroxyphenyl)-1-methyethyl]-1,3-dihydroxybenzene, 4-[(3,5-dimethyl-4-hydroxyphenyl)methyl]- 1,2,3-trihydroxybenzene, 1,4-bis[1-bis(3,4-dihydroxyphenyl)-1-methylethyl]benzene, 1,4-bis[1-bis(2,3,4-trihydroxyphenyl)-1-methyethyl]benzene, 2,4-bis[(4-hydroxyphenyl)methyl]-1,3- dihydroxybenzene, 2-[bis(3-methyl-4-hydroxyphenyl)methyl] phenol, 4-[bis(3-methyl-4-hydroxyphenyl)methyl]phenol, 2-[bis(2-methyl-4-hydroxyphenyl)methyl]phenol, 4-[bis(3-methyl-4-hydroxyphenyl)methyl]-1,2-dihydroxybenzene, 4-[bis(4-hydroxyphenyl)methyl]-2-ethoxyphenol, 2-[bis(2,3-dimethyl-4-hydroxyphenyl)methyl]phenol, 4-[bis(3,5-dimethyl-4-hydroxyphenyl)methyl]phenol, 3-[bis(3,5-dimethyl-4-hydroxyphenyl)methyl]phenol, 2-[bis(2-hydroxy-3,6-dimethylphenyl)methyl]phenol, 4-[bis(2-hydroxy-3,6-dimethylphenyl)methyl]phenol, 4-[bis(3,5-dimethyl-4-hydroxyphenyl)methyl]-2-methoxyphenol, 3,6-[bis(3,5-dimethyl-4-hydroxyphenyl)methyl]-1,2-dihydroxybenzene, 4,6-[bis(3,5-dimethyl-4-hydroxyphenyl)methyl]-1,2,3-trihydroxybenzene, 2-[bis(2,3,6-trimethyl-4-hydroxyphenyl)methyl]phenol, 2-[bis(2,3,5-trimethyl-4-hydroxyphenyl)methyl]phenol, 3-[bis(2,3,5-trimethyl-4-hydroxyphenyl)methyl]phenol, 4-[bis(2,3,5-trimethyl-4-hydroxyphenyl)methyl]phenol, 4-[bis(2,3,5-trimethyl-4-hydroxyphenyl)methyl]-1,2- dihydroxybenzene, 3-[bis(2-methyl-4-hydroxy-5-cyclohexylphenyl)methyl]phenol, 4-[bis(2-methyl-4-hydroxy-5-cyclohexylphenyl)methyl]phenol, 4-[bis(2-methyl-4-hydroxy-5-cyclohexylphenyl)methyl]-2-methoxyphenol, 2,4,6-tris[(4-hydroxyphenyl)methyl]-1,3-dihydroxybenzene, 1,1,2,2-tetra(3-methyl-4-hydroxyphenyl)ethane, 1,1,2,2-tetra(3,5-dimethyl-4- hydroxyphenyl)ethane, 1,4-di[bis(4-hydroxyphenyl)methyl] benzene, 1,4-di[bis(3-methyl-4-hydroxyphenyl)methyl]benzene, 1,4-di[bis(3,5-dimethyl-4-hydroxyphenyl)methyl]benzene, 4-[1,1-bis(4-hydroxyphenyl)ethyl]aniline, (2,4-dihydroxyphenyl)-(4-hydroxyphenyl)ketone, 2-[bis(4-hydroxyphenyl)methyl]phenol, and 1,3,3-tri(4-hydroxyphenyl)butane. These compounds may not be always used alone but a plurality of them may be used together.

Examples of the methods for producing the polyarylate according to the present invention include a solution polymerization method in which a bifunctional carboxylic acid halide is allowed to react with a bifunctional phenol in an organic solution (A. Conix, Ind. Eng. Chem. 51, 147, 1959; Japanese Examined Patent Publication No. 37-5599); a melt polymerization method in which a bifunctional carboxylic acid and bifunctional phenol are heated in the presence of acetic anhydride; a melt polymerization method in which a bifunctional carboxylic acid and bifunctional phenol are heated in the presence of diallylcarbonate (Japanese Examined Patent Publication No. 38-26299); and an interfacial polymerization method in which a bifunctional carboxylic acid halide dissolved in an organic solvent not compatible with water and a bifunctional phenol dissolved in an aqueous solution of alkali are mixed (W. M. Eareckson, J. Poly. Sci., XL399, 1959; Japanese Examined Patent Publication No. 40-1959). While the polyarylate according to the present invention containing 9,9-bis(alkyl-4-hydroxyphenyl)fluorene as a structural unit can he produced by the method known in the art as described above, the interfacial polymerization method is advantageously used.

The production method by the interfacial polymerization will be described in detail hereinafter. An aqueous alkali solution of 9,9-bis(alkyl-4-hydroxyphenyl)fluorene as a starting material of the structural unit represented by the general formula (1), chemical formula (3) or chemical formula (4), and dioxybenzene and/or bisphenol as a starting material of the compound represented by the general formula (2) or chemical formula (5) are firstly prepared. Then, a polymerization catalyst, for example a tertiary amine such as trimethylamine and triethylamine, a quaternary ammonium salt such as trimethylbenzyl ammonium chloride and tributylbenzyl ammonium chloride, and a quaternary phosphonium salt such as tetrabutylphosphonium chloride, are added in the solution. A solution prepared by dissolving a bifunctional carboxylic acid halide in a solvent that is not compatible with water hut dissolves the polyarylate, for example a chlorinated solvent such as methylene chloride, 1,2-dichloroethane, chloroform and chlorobenzene, and an aromatic hydrocarbon such as toluene, benzene and xylene, is mixed with the alkali solution prepared as described above. The desired polyarylate (a copolymer) is obtained by allowing the mixture to react with stirring for 1 to 5 hours at a temperature of 25°C or less. The alkali that can he used herein includes sodium hydroxide and potassium hydroxide.

The molecular weight of the polyarylate according to the present invention can be controlled, irrespective of

the method as described above, by adding a monofunctional compound during polymerization. Examples of the substance used as a molecular weight control agent include monofunctional phenols such as phenol, cresol and p-tert-butylphenol; monofunctional acid chlorides such as benzoic acid chloride, methanesulfonyl chloride and phenylchloroformate; monofunctional alcohols such as methanol, ethanol, n-propanol, isopropanol, n-butanol, pentanol, hexanol, dodecyl alcohol, stearyl alcohol, benzyl alcohol and phenethyl alcohol; and monofunctional carboxylic acids such as acetic acid, propionic acid, octanoic acid, cyclohexane carboxylic acid, benzoic acid, toluylic acid, phenylic acid, p-tert-butylbenzoic acid and p-methoxyphenylacetic acid.

The quantity of the monofunctional compound for use as a molecular weight control agent is determined so that the inherent viscosity (η inh.) falls into a given range.

The inherent viscosity (η inh.) of the solution containing 1 g/dl of the polyarylate obtained by the foregoing method in tetrachloroethane at 25°C is in the range of 0.25 to 2.50, preferably in the range of 0.25 to 1.50 and more preferably in the range of 0.5 to 1.3.

The inherent viscosity of less than 0.25 is not preferable because the mechanical strength of the polymer obtained is so low that the surface strength of the film and coating film is not sufficient. When the inherent viscosity exceeds 2.50, the polymer solution for use in coating becomes so sticky or viscosity of the solution prepared at the time of coating is so increased that its handling becomes difficult.

It is essential that the carboxyl value of the polyarylate according to the present invention is 30 mole/ton or less. A carboxyl value of 15 mole/ton or less is preferable since the value affects the electric characteristics such as arc discharge resistance and dielectric constant. The carboxyl value of the resin can be obtained by a conventional method such as neutralization titration using a potentiometric titrator.

The carboxyl value should be also adjusted to 30 mole/ton or less because the value affects stability during storage of the polymer solution prepared by dissolving the resin in a solvent such as toluene, methylene chloride and tetrahydrofuran. When a solution having as high a concentration as 20% by weight or more along with a long period of storage stability is required in preparing, for example, a film, a carboxyl value of less than 15 mole/ton is preferable.

Also, the carboxyl value should he suppressed below 30 mole/ton since the value affects the surface characteristics of the film obtained by a solvent casting method.

It is preferable that the quantity of the residual alkali metals in the polyarylate according to the present invention is less than 50 ppm. The quantity of the residual alkali metals of 50 ppm or more is not preferable because the electric characteristic described above tends to be deteriorated besides the surface characteristics and electric characteristics are adversely affected along with causing the performance of the functional film endowed with electrical conductivity to be decreased. The content of residual alkali metals in the polyarylate according to the present invention can he determined by a conventional method such as ion chromatography, atomic absorption method and plasma emission spectrophotometry.

The quantity of the residual catalyst such as quaternary ammonium salts and quaternary phosphonium salts in the polyarylate according to the present invention is preferably less than 200 ppm, more preferably less than 100 ppm. The quantity of the residual catalyst of 200 ppm or more is not preferable since dielectric breakdown strength tends to be decreased, adversely affecting the performance when the resin is formed into the film as described above. The content of the residual catalyst such as quaternary ammonium salts and quaternary phosphonium salts in the polyarylate according to the present invention can be determined by gas chromatography.

The polyarylate according to the present invention substantially assumes an amorphous form besides having a high solubility in a solvent such as methylene chloride, chloroform, 1,1,2,2-tetrachloroethane, 1,2-dichloroethane, tetrahydrofuran, 1,4-dioxane, toluene, xylene, γ-butyrolactone, benzylalcohol, isophorone, chlorobenzene, dichlorobenzene and hexafluoroisopropanol. It is preferable to completely dissolve the resin in these solvents at a concentration of 10% by weight or more.

Amorphous structure of the resin may be confirmed by detecting no melting point by a method known in the art such as differential scanning calorimetry (DSC) and dynamic viscoelasticity measurement.

Various kind of antioxidants such as hindered phenols, hindered amines, thioethers and phosphates may be added in the polyarylate according to the present invention in the range not affecting the characteristics of the resin. An electrically conductive filler such as carbon black, acetylene black, ketchen black and metallic powder, and various kind of fillers such as silica and talc may be also added in order to endow the resin with a variety of performance.

The polyarylate film according to the present invention can be obtained by any film-forming method not restrictive to a specified method. One example will be described hereinafter.

The polyarylate film is produced through a film-application step and drying step.

A solvent casting method is advantageously used in the film-application step. The solvent to he used in the solvent casting method is not especially limited but may be any solvents among the foregoing solvents that can dissolve the polyarylate according to the present invention.

In the drying step after the film-application step, the film should be gradually heated and dried considering the kind of the polyarylate and the glass transition point that changes depending on the quantity of the residual solvents.

The process as described above allows an optically isotropic polyarylate film to be obtained.

When the film is insufficiently heat-dried, the quantity of the residual solvents becomes larger while, when the film is overheated, the polyarylate is heat-decomposed to increase the quantity of the residual phenol monomer. Furthermore, a hasty heat-drying of the film will cause the incorporated solvents to be rapidly evaporated, generating defects such as bubbles in the film.

It is essential that the quantity of the residual solvents in the polyarylate film according to the present invention is less than 2000 ppm, preferably less than 1000 ppm. The quantity of the residual solvents of 2000 ppm or more is not preferable since the surface characteristics of the film becomes poor, adversely affecting surface treatment. The quantity of the residual solvents in the polyarylate film according to the present invention can be determined by a method known in the art such as gas chromatography.

The thickness of the polyarylate film according to the present invention is not especially limited hut is, generally speaking, in the range of 0.5 to 1500 μm, preferably in the range of 0.5 to 500 μm. A total light transmittance of the polyarylate is required to be 80% or more, preferably 90% or more.

The polyarylate film according to the present invention has preferably a birefringence of 20 nm or less against a vertical incident light, a birefringence of 10 nm or less being especially preferable. The range of variation ratio of the birefringence against an oblique incident light relative to the birefringence against a vertical incident light is preferably 30% or less, a ratio of 20% or less being especially preferable.

It is essential that the quantity of the residual phenol monomer and residual dicarboxylic acid in the polyarylate according to the present invention and in the film obtained by the solvent casting method is 1000 ppm or less. The quantity is preferably 500 ppm or less, more preferably 300 ppm or less. The quantity of the residual phenol monomer and dicarboxylic acid of more than 1000 ppm is not preferable since the aforementioned electric characteristics are adversely affected along with causing a poor surface characteristics of the film. Also, the quantity of the residual phenol monomer and dicarboxylic acid of more than 1000 ppm is not preferable, because due to the effect of heating and plasma while forming a film when a transparent conductive film is formed on the film obtained by the solvent casting method, the film is adversely affected in such manners that gases of the residual phenol monomer and dicarboxylic acid are generated, that crystal grains are formed in the transparent conductive film due to heat decomposition, or that non-coated portions called "voids" appear and inhibit the transparent conductive film from having a low electric resistance. The quantity of the residual phenol monomer and dicarboxylic acid in the polyarylate and its film can be determined by a method known in the art such as nuclear magnetic resonance spectroscopy.

As for abrasion resistance of the polyarylate film as measured with a Taber abrasion tester (abrasion ring: CS-10F), the weight loss after 10,000 cycle of tests under a load of 250 g is preferably 10 mg or less, more preferably 5 mg or less.

## Example

Although the present invention is described in detail referring to the examples and comparative examples, it is by no means limited to these examples but various modifications and applications are possible without departing from the spirit of the present invention.

### (Example 1)

After adding 2,514 parts by weight of water in a reaction vessel equipped with a stirrer, 22.7 parts by weight of sodium hydroxide, 51.3 parts by weight of 9,9-bis(3,5-dimethyl-4-hydroxyphenyl)fluorene as a bifunctional phenol and 0.162 parts by weight of p-tert-butylphenol (PTBP) as a molecular weight control agent were dissolved in water. After adding 0.34 parts by weight of a polymerization catalyst (tributylbenzyl ammonium chloride), the mixed solution was vigorously stirred. In a separate experiment, 25.8 parts by weight of a mixture comprising an equal quantity of terephthalic acid chloride and isophthalic acid chloride was weighed and the mixture was dissolved in 945 parts by weight of methylene chloride. The methylene chloride solution was added dropwise into the previously prepared alkaline solution to start polymerization. The polymerization temperature was adjusted within the range of 15°C or more and 20°C or less. After 2 hours' polymerization, the polymerization reaction was stopped by adding acetic acid in the reaction system followed by separation of the organic phase from the aqueous phase. The organic phase was repeatedly washed with twice volume of ion exchange water, followed by phase separation. Washing was repeated until electric conductivity of the washing water had been decreased to less than 50 μS/cm. A powder of the polymer was obtained by pouring the organic phase into a warm water bath at 50°C equipped with a homomixer to allow methylene chloride to evaporate. The polyarylate according to the present invention was obtained after dehydration and drying of the powder.

(Examples 2 to 18, Comparative Examples 1 to 5)

Resins were produced by the same method as described in Example 1, except that the bifunctional phenol components, molar ratio of polymerization, the quantity of PTBP against the bifunctional phenol and the degree of washing were changed. The production conditions are listed in TABLE 1.

(Example 19)

A methylene chloride solution containing 20% by weight of the polyarylate obtained in Example 1 was prepared. After filtrating the solution through a filter with a pore size of 5 μm, a cast film was spread on a substrate followed by gradually heating at 30, 40 and 80°C to dry the top face of the film. The resulting film was released from the substrate. Both faces of the released film was then gradually heated at 80°C, 100°C, 130°C, 150°C, 175°C and 190°C for drying, thereby obtaining a film.

(Examples 20 to 36, Comparative examples 6 to 7)

Films were obtained by the same method as described in Example 19, except that the polyarylates used were changed. The concentration of the polyarylate solution was adjusted to a concentration suitable for forming the films depending on the viscosity of the polyarylate solution used.

(Comparative Example 8)

Although a film was attempted to form using the polyarylate obtained in Comparative Example 5, the viscosity of the solution was too low to form a film.

(Example 37 and 38)

A film was obtained by the same method as in Example 19, except that the heat-drying temperature was changed. The temperature was further increased up to 250°C in Example 37. The heat-drying temperature was limited to 130°C in Example 38.

Evaluation of the polyarylate resin and film

The polyarylate resin and film synthesized as described above were evaluated. The results are shown in TABLE 1 and 2.

TABLE 1

| | Fluorene[1] | | | Bifunctional phenol[2] | | Alkali | PTBP | MPC | Degree of Washing |
|---|---|---|---|---|---|---|---|---|---|
| | kind | parts by weight | mole %[5] | Kind | parts by weight | parts by weight | parts by weight | parts by weight | (μS/cm) |
| Example 1 | BXF | 51.3 | 100 | | | 22.7 | 0.162 | 25.8 | <50 |
| Example 2 | BXF | 51.0 | 100 | | | 22.6 | 0.555 | 25.8 | <50 |
| Example 3 | BXF | 50.9 | 100 | | | 22.5 | 0.741 | 25.9 | <40 |
| Example 4 | BCF | 50.4 | 100 | | | 21.6 | 0.594 | 27.5 | <50 |
| Example 5 | BCF | 50.8 | 100 | | | 21.6 | 0.183 | 27.4 | <50 |
| Example 6 | BCF | 50.9 | 100 | | | 21.7 | 0.039 | 27.3 | <40 |
| Example 7 | BXF | 38.6 | 67 | BPA | 10.8 | 21.1 | 0.043 | 29.5 | <50 |
| Example 8 | BCF | 38.7 | 70 | BPA | 10.0 | 20.3 | 0.758 | 30.2 | <50 |
| Example 9 | BCF | 39.3 | 70 | TMBPA | 12.6 | 17.9 | 0.051 | 30.1 | <30 |
| Example 10 | BXF | 31.0 | 50 | BPA | 17.4 | 20.1 | 0.334 | 31.2 | <40 |
| Example 11 | BCF | 29.9 | 50 | BPA | 18.0 | 19.4 | 0.345 | 32.4 | <50 |
| Example 12 | BCF | 35.6 | 50 | TMBPA | 18.5 | 19.1 | 0.049 | 26.8 | <50 |
| Example 13 | BXF | 23.5 | 33 | BPA | 24.4 | 18.6 | 0.601 | 32.9 | <50 |
| Example 14 | BCF | 19.2 | 30 | BPA | 27.1 | 18.3 | 0.645 | 34.8 | <40 |
| Example 15 | BCF | 17.7 | 30 | TMBPA | 31.1 | 19.3 | 0.047 | 31.8 | <50 |
| Example 16 | BCF | 50.4 | 100 | | | 21.6 | 0.594 | 27.5 | 300 |
| Example 17 | BCF | 50.2 | 100 | | | 21.5 | 0.801 | 27.5 | 100 |
| Example 18 | BXF | 51.0 | 100 | | | 22.6 | 0.555 | 35.9 | <50 |
| Comparative Example 1 | | | 0 | BPA | 43.0 | 16.3 | 1.416 | 39.3 | <50 |
| Comparative Example 2 | | | 0 | TMBPA | 48.1 | 17.7 | 0.126 | 34.1 | <40 |
| Comparative Example 3 | BCF | 29.1 | 50 | BPA | 17.6 | 19.3 | 1.545 | 32.4 | <50 |
| Comparative Example 4 | BCF | 50.4 | 100 | | | 21.6 | 0.594 | 27.5 [4] | <50 |
| Comparative Example 5 | BCF | 51.1 | 100 | | | 22.6 | 0.555 | 27.5 [4] | <50 |

1) Fluorene BXF : 9,9-bis(3,5-dimethyl-4-hydroxyphenyl)fluorene
BCF : 9,9-bis(3-methyl-4-hydroxyphenyl)fluorene

2) bifunctional phenol BPA : 2,2-bis(4-hydroxyphenyl)propane
TMBPA : 2,2-bis(3,5-dimethyl-4-hydroxyphenyl)4ydroxyphenyl)propane

3) n.d. 4) Only isophthalic acid

5) Proportion relative to the total bifunctional phenol

Table 1 (continued)

| | Glass transition temperature (°C) | Viscosity (dl/g) | Acid value (mol/ton) | Residual Na (ppm) | Residual Catalyst (ppm) | Residual phenol monomer (ppm) | Residual dicarboxylic acid (ppm) |
|---|---|---|---|---|---|---|---|
| Example 1 | 305 | 1.200 | 18.2 | 3.5 | 4 | 170 | 15.3 |
| Example 2 | 303 | 0.887 | 23.1 | 5.3 | 12 | 240 | 20.9 |
| Example 3 | 305 | 0.853 | 15.6 | 4.8 | 11 | 120 | 12.2 |
| Example 4 | 291 | 1.004 | 17.3 | 4.2 | 18 | 180 | 16.6 |
| Example 5 | 291 | 1.205 | 12.1 | 5.7 | 24 | 260 | 23.4 |
| Example 6 | 291 | 1.280 | 11.5 | 2.6 | 2 | 140 | 13.3 |
| Example 7 | 272 | 1.281 | 13.5 | 6.9 | 13 | 340 | 27.9 |
| Example 8 | 262 | 0.988 | 22.5 | 7.3 | 3 | 100 | 8.2 |
| Example 9 | 280 | 1.275 | 11.8 | n.d [3)] | 9 | 210 | 18.9 |
| Example 10 | 253 | 1.172 | 19.5 | 2.1 | 6 | 160 | 16.0 |
| Example 11 | 242 | 1.173 | 12.0 | 4.2 | 22 | 240 | 26.4 |
| Example 12 | 269 | 1.273 | 11.8 | 6.8 | 19 | 250 | 24.0 |
| Example 13 | 232 | 0.991 | 17.3 | 3.8 | 15 | 100 | 9.4 |
| Example 14 | 223 | 0.993 | 20.7 | 1.1 | 4 | 260 | 23.4 |
| Example 15 | 223 | 1.279 | 9.2 | 0.7 | 2 | 380 | 31.5 |
| Example 16 | 291 | 1.004 | 17.3 | 62.3 | 314 | 320 | 29.1 |
| Example 17 | 290 | 0.519 | 27.3 | 31.9 | 215 | 130 | 11.4 |
| Example 18 | 287 | 0.883 | 37.1 | 3.7 | 39 | 180 | 17.3 |
| Comparative Example 1 | 192 | 0.894 | 26.3 | 6.6 | 74 | 240 | 20.9 |
| Comparative Example 2 | 242 | 1.213 | 11.9 | 4.9 | 2 | 120 | 12.7 |
| Comparative Example 3 | 241 | 0.209 | 18.2 | 2.6 | 31 | 200 | 19.1 |
| Comparative Example 4 | 280 | 0.949 | 14.7 | 2.9 | 23 | 150 | 12.1 |
| Comparative Example 5 | 290 | 0.947 | 19.3 | 1.5 | 18 | 200 | 9.2 |

TABLE 2

| | Polyarylate | Glass transition temperature (°C) | Residual Solvent (ppm) | Residual phenol monomer (ppm) | Residual dicarboxylic acid (ppm) | Amount of abrasion (mg) | Total light transmittance (%) | Birefringence (nm) | |
|---|---|---|---|---|---|---|---|---|---|
| | | | | | | | | Vertical light | Oblique (45°) light |
| Example 19 | Example 1 | 305 | 50 | 180 | 15.8 | 1.9 | 94 | 5 | 4 |
| Example 20 | Example 2 | 303 | 30 | 240 | 21.0 | 3.9 | 94 | 4 | 5 |
| Example 21 | Example 3 | 305 | 70 | 140 | 12.5 | 4.2 | 93 | 3 | 4 |
| Example 22 | Example 4 | 291 | 90 | 190 | 17.2 | 2.1 | 94 | 5 | 5 |
| Example 23 | Example 5 | 291 | 100 | 260 | 23.5 | 1.8 | 92 | 4 | 5 |
| Example 24 | Example 6 | 291 | 40 | 150 | 13.7 | 1.4 | 94 | 4 | 5 |
| Example 25 | Example 7 | 272 | 70 | 380 | 28.2 | 2.0 | 95 | 6 | 5 |
| Example 26 | Example 8 | 262 | 50 | 100 | 8.3 | 4.6 | 95 | 2 | 3 |
| Example 27 | Example 9 | 280 | 120 | 220 | 19.0 | 2.1 | 90 | 3 | 5 |
| Example 28 | Example 10 | 253 | 90 | 170 | 16.4 | 2.6 | 93 | 8 | 8 |
| Example 29 | Example 11 | 242 | 70 | 240 | 26.4 | 2.6 | 93 | 11 | 12 |
| Example 30 | Example 12 | 269 | 150 | 260 | 24.1 | 2.3 | 90 | 4 | 6 |
| Example 31 | Example 13 | 232 | 20 | 120 | 9.7 | 5.1 | 92 | 31 | 31 |
| Example 32 | Example 14 | 223 | 30 | 270 | 23.6 | 5.0 | 92 | 19 | 19 |
| Example 33 | Example 15 | 223 | 70 | 400 | 33.1 | 2.8 | 91 | 35 | 18 |
| Example 34 | Example 16 | 291 | 50 | 340 | 29.2 | 4.2 | 92 | 5 | 6 |
| Example 35 | Example 17 | 290 | 70 | 150 | 17.8 | 8.2 | 91 | 6 | 6 |
| Example 36 | Example 18 | 287 | 110 | 180 | 17.5 | 5.7 | 90 | 4 | 5 |
| Example 37 | Example 6 | 291 | 40 | 1120 | 106.4 | 1.4 | 86 | 19 | 21 |
| Example 38 | Example 8 | 262 | 2500 | 100 | 8.3 | 2.2 | 95 | 2 | 3 |

TABLE 2 (continued)

| | Polyarylate | Glass transition temperature (°C) | Residual Solvent (ppm) | Residual phenol monomer (ppm) | Residual dicarboxylic acid (ppm) | Amount of abrasion (mg) | Total light transmittance (%) | Birefringence (nm) | |
|---|---|---|---|---|---|---|---|---|---|
| | | | | | | | | Vertical light | Oblique (45°) light |
| Comparative Example 6 | Comparative Example 1 | 192 | 120 | 260 | 21.2 | 5.7 | 94 | 36 | 45 |
| Comparative Example 7 | Comparative Example 2 | 242 | 60 | 140 | 12.9 | 6.2 | 91 | 71 | 35 |
| Comparative Example 8 | Comparative Example 3 | 241 | ··· could not form into a film ··· | | | | | | |
| Comparative Example 9 | Comparative Example 4 | 280 | 30 | 160 | 12.3 | 5.4 | 94 | 4 | 5 |
| Comparative Example 10 | Comparative Example 5 | 290 | 40 | 220 | 10.6 | 5.4 | 94 | 4 | 5 |

The evaluation methods were as follows:

1) Heat resistance

The glass transition temperature was measured with a DSC (Differential Scanning Calorimeter) made by Perkin-Elmar Co. using 10 mg of sample at a temperature increase rate of 20°C/min. This glass transition temperature was used as an index of heat resistance.

2) Solution viscosity

The viscosity of the solution containing 1 g/dl of the resin was measured at 25°C using 1,1,2,2-tetrachloroethane as a solvent.

3) Abrasion resistance

Weight loss of the film prepared as described previously after 10,000 cycles of abrasion test under a load of 250 g was measured with a Taber abrasion tester (abrasion ring: CS-10F). The weight loss was used as an index of abrasion resistance.

4) Carboxyl value

Polyarylate (0.15 g) was precisely weighed in a test tube and dissolved in 5 ml of benzyl alcohol with heating. After mixing 10 ml of chloroform and the benzyl alcohol solution of the polyarylate, phenol red was added as an indicator to subject the mixed solution to a neutralization titration with stirring using a benzyl alcohol solution containing 0.1 N of KOH, thereby obtaining the carboxyl value (expressed in terms of acid value in the table).

5) Quantity of residual sodium

Nitric acid was added to the polyarylate to subject it to a heat degradation treatment with a microwave wet degradation apparatus (MLS-1200MEGA, MDR1000/160/60Rotar, made by Miles Co.). The heat degradation treatment was repeated by successively adding sulfuric acid and perchloric acid to solubilize the sample. The solution obtained was assayed with an atomic absorption spectrophotometer (ICAP-575-II; made by Japan Jarrel-Ash Co.) to determine the quantity of residual sodium in the polyarylate.

6) Quantity of residual catalyst

After dissolving the polyarylate in chloroform, it was precipitated by adding methanol and a given quantity of biphenyl was added in the solution as an internal standard. The methanol solution containing the residual catalyst was subjected to a gas chromatographic analysis (HP-6890 series GC system, made by Heulett-Packard Co.) to determine the residual catalyst in the polyarylate.

7) Quantity of residual phenol monomer and dicarboxylic acid

Ten grams of the polyarylate or its film was extracted with n-hexane for 12 hours using a Soxhlet extractor. The quantity of the monomer contained in the extract was determined by nuclear magnetic resonance method.

8) Quantity of residual solvent

Dissolved was 50 mg of the polyarylate in 1 ml of tetrahydrofuran followed by allowing the polyarylate to precipitate by adding 1 ml of methanol. After adding 30 μg of n-propanol as an internal standard, the solution was centrifuged to sample the supernatant of the solution. The quantity of the residual solvent in the polyarylate was determined with a gas chromatographic apparatus (GC-9A, made by Shimadzu Co.).

9) Birefringence

Birefringence was measured with Automatic Ellipsometer DVA-36VWLD made by Mizojiri Optical Work Co. A helium-neon laser (633 nm) was used as a light source. Using a cast film with a dimension of 10 cm in length and width, and 100 μm in thickness, retardation values were measured at nine different points and an averaged value of them was used as a representative. Birefringence was measured using a vertical incident light and oblique (45°) incident light against the film surface.

10) Transparency

Total light transmittance was used as an index of transparency of the film. The total light transmittance was measured using Color Measuring System Z-Σ90 made by Nihon Denshoku Kogyo Co.

The following conclusions were obtained from the experiments as hitherto described:

(1) It is evident from comparison of Examples 1 to 18 with Comparative Examples 1 and 2 that the polyarylate containing 9,9-bis(alkyl-4-hydroxyphenyl)fluorene residue according to the present invention has good heat resistance.

(2) It is evident from comparison of Examples 19 to 38 with Comparative Examples 6 and 7 that the polyarylate film containing 9,9-bis(alkyl-4-hydroxyphenyl)fluorene residue according to the present invention has smaller birefringence than the bisphenol A-polyarylate film. It is also evident that the former film shows less incident-angle dependency of birefringence along with having high transparency.

(3) It can be clearly concluded from comparison of Examples 25 to 33 with Comparative Examples 6 and 7 that the polyarylate film according to the present invention, in which the bifunctional diphenol component comprises 9,9-bis(3-methyl-4-hydroxyphenyl)fluorene and 2,2-bis(3,5-dimethyl-4-hydroxyphenyl)propane and in which the-former compound is contained by more than 30 mol%, especially by 50 mol% or more, shows far smaller birefringence than the bisphenol A-polyarylate film.

(4) It was made clear from comparison of Examples 19 to 38 with Comparative Examples 6 and 7 that the polyarylate containing 9,9-bis(alkyl-4-hydroxyphenyl)fluorene residue according to the present invention has a good abrasion resistance.

(5) It was shown in Comparative Examples 9 and 10 that the polyarylate films according to Comparative Examples 4 and 5 using merely isophthalic acid have poor abrasion resistance as compared with the films according to Examples 22 to 24.

Industrial Applicability

The novel polyarylate according to the present invention can be not only used in the field of machine industry, automobile industry and food industry but also is applicable as a variety of coating films in electric and electronic industry, optical industry and automobile industry by taking advantage of its good abrasion resistance and heat resistance, high purity as well as excellent optical characteristics such as high transparency and low birefringence. The film thereof is applicable for insulating materials for electric appliances, power generators, resistors and interlayer insulation films, coating films for transformers and electric wires, dielectric films such as capacitors, and optical devices such as liquid crystal display panels.

Examples of the applications as coating film resins include binder resins for use in electric, electronic and optical appliances, and coating film type variable transformers. The resin can be also applied for solvent cast type films for use in watches and clocks, televisions, IC cards, word processors, personal computers, liquid crystal displays and electroluminescence displays for dashboards and display boards, transparent conductive films for polarizer and surface protection films of optical disks and optical cards. The resin may serves as substitutes of currently used glass and metallic substrates in electric, electronic and optical elements.

## Claims

**1.** A polyarylate comprising:

a bifunctional phenol component being composed of

(a) a 9,9-bis(alkyl-4-hydroxyphenyl)fluorene residue represented by a general formula (1)

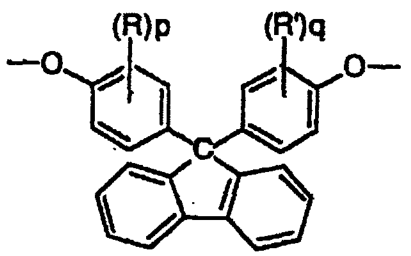

(1)

(wherein R and R' in the formula are selected from alkyl groups having a carbon number of 1 to 4, p and q representing an integer of 1 to 4); and

(b) a bifunctional phenol residue represented by a general formula (2) and/or a dioxybenzene residue that are added if necessary,

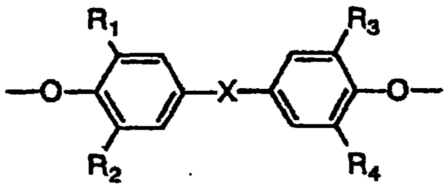

(2)

(wherein $R_1$, $R_2$, $R_3$ and $R_4$ in the formula are each independently selected from the group consisting of a hydrogen atom, a halogen atom, a hydrocarbon group or a nitro group, the hydrocarbon group being selected from the group consisting of aliphatic groups having a carbon number of 1 to 20, alicyclic groups having a carbon number of 3 to 20 and aromatic groups having a carbon number of 6 to 20, X being selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyalkylidene group, a substituted phenyalkylidene group, a carbonyl group, a sulfonyl group, a carboxylalkylene group, a carboxylalkylidene group, an alkoxycarbonyl alkylene group, an alkoxycarbonyl alkylidene group, a fluorene group, an isatin group, an alkylsilane group and a dialkylsilane group), wherein

the mole fraction between (a) and (b) is within the range represented by the following relation:

$$0.05 \leq [(a)/\{(a) + (b)\}] \leq 1.00; \text{ and}$$

a dicarboxylic acid component being composed of 10 to 90 mol% of a terephthalic acid residue and 90 to 10 mol% of an isophthalic acid residue; and
an inherent viscosity ($\eta$ inh.) at 25°C of a solution of the polyarylate with a concentration of 1.0 g/dl in 1,1,2,2-tetrachloroethane as a solvent is within the range represented by the following relation:

$$0.25 \leq n \text{ inh.} \leq 2.50.$$

**2.** A polyarylate comprising:

a bifunctional phenol component being composed of

(c) a 9,9-bis(3,5-dimethyl-4-hydroxyphenyl)fluorene residue represented by a chemical formula (3); and

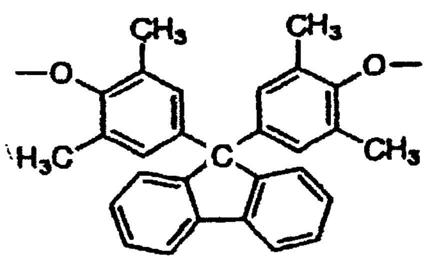

(3)

(b) a bifunctional phenol residue represented by a general formula (2) and/or a dioxybenzene residue that are added if necessary,

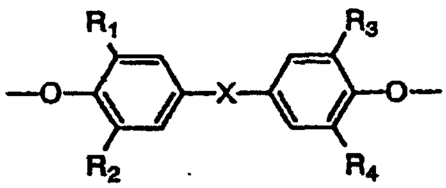

(2)

(wherein $R_1$, $R_2$, $R_3$ and $R_4$ in the formula are each independently selected from the group consisting of a hydrogen atom, a halogen atom, a hydrocarbon group or a nitro group, the hydrocarbon group being selected from the group consisting of aliphatic groups having a carbon number of 1 to 20, alicyclic groups having a carbon number of 3 to 20 and aromatic groups having a carbon number of 6 to 20, X being selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyalkylidene group, a substituted phenyalkylidene group, a carbonyl group, a sulfonyl group, a carboxylalkylene group, a carboxylalkylidene group, an alkoxycarbonyl alkylene group, an alkoxycarbonyl alkylidene group, a fluorene group, an isatin group, an alkylsilane group and a dialkylsilane group.), wherein

the mole fraction between (c) and (b) is within the range represented by the following relation:

$$0.05 \leq [(c)/\{(c) + (b)\}] \leq 1.00; \text{ and}$$

a dicarboxylic acid component being composed of 10 to 90 mol% of a terephthalic acid residue and 90 to 10 mol% of an isophthalic acid residue; and
an inherent viscosity ($\eta$ inh.) at 25°C of a solution of the polyarylate with a concentration of 1.0 g/dl in 1,1,2,2-tetrachloroethane as a solvent is within the range represented by the following relation:

$$0.25 \leq \eta \text{ inh.} \leq 2.50.$$

**3.** A polyarylate according to Claim 2 having an inherent viscosity ($\eta$ inh.) within the following range:

$$0.25 \leq \eta \text{ inh.} \leq 1.50.$$

**4.** A polyarylate comprising:

a bifunctional phenol component being composed of

(d) a 9,9-bis(3-methyl-4-hydroxyphenyl)fluorene residue represented by a chemical formula (4); and

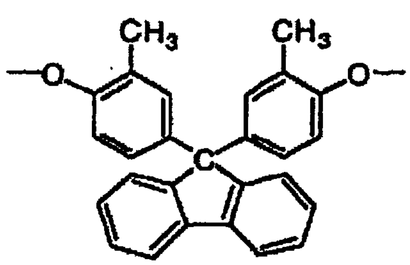

(4)

(b) a bifunctional phenol residue represented by a general formula (2) and/or a dioxybenzene residue that are added if necessary,

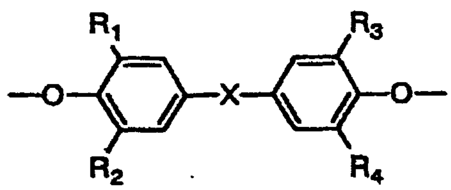

(2)

(wherein $R_1$, $R_2$, $R_3$ and $R_4$ in the formula are each independently selected from the group consisting of a hydrogen atom, a halogen atom, a hydrocarbon group or a nitro group, the hydrocarbon group being selected from the group consisting of aliphatic groups having a carbon number of 1 to 20, alicyclic groups having a carbon number of 3 to 20 and aromatic groups having a carbon number of 6 to 20, X being selected from the group consisting of a single bond, an oxygen atom, a sulfur atom, an alkylene group, an alkylidene group, a cycloalkylene group, a cycloalkylidene group, a halo-substituted alkylene group, a halo-substituted alkylidene group, a phenyalkylidene group, a substituted phenyalkylidene group, a carbonyl group, a sulfonyl group, a carboxylalkylene group, a carboxylalkylidene group, an alkoxycarbonyl alkylene group, an alkoxycarbonyl alkylidene group, a fluorene group, an isatin group, an alkylsilane group and a dialkylsilane group.), wherein

the mole fraction between (d) and (b) is within the range represented by the following relation:

$$0.05 \leq [(d)/\{(d) + (b)\}] \leq 1.00; \text{ and}$$

a dicarboxylic acid component being composed of 10 to 90 mol% of a terephthalic acid residue and 90 to 10 mol% of an isophthalic acid residue; and
an inherent viscosity ($\eta$ inh.) at 25°C of a solution of the polyarylate with a concentration of 1.0 g/dl in 1,1,2,2-tetrachloroethane as a solvent is within the range represented by the following relation:

$$0.25 \leq \eta \text{ inh.} \leq 1.50.$$

**5.** A polyarylate comprising:

a bifunctional phenol component being composed of

(d) a 9,9-bis(3-methyl-4-hydroxyphenyl)fluorene residue represented by a chemical formula (4); and

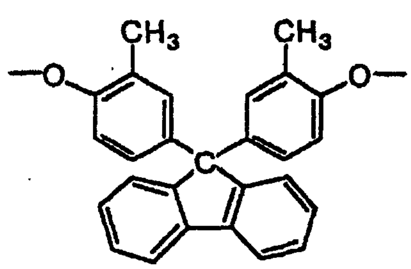

(4)

(f) a 2,2-bis(3,5-dimethyl-4-hydroxyphenyl)propane residue represented by a chemical formula (5) that is added if necessary,

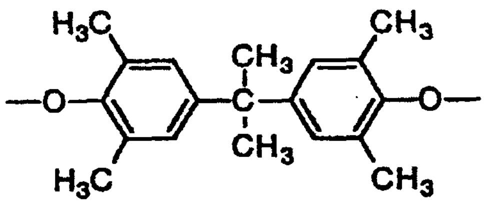

(5)

wherein

the mole fraction between (d) and (f) is within the range represented by the following relation:

$$0.30 < [(d)/\{(d) + (f)\}] \leq 1.00, \text{ and}$$

a dicarboxylic acid component being composed of 10 to 90 mol% of a terephthalic acid residue and 90 to 10 mol% of an isophthalic acid residue; and
an inherent viscosity ($\eta$ inh.) at 25°C of a solution of the polyarylate with a concentration of 1.0 g/dl in 1,1,2,2-tetrachloroethane as a solvent is within the range represented by the following relation

$$0.25 \leq \eta \text{ inh.} \leq 2.50.$$

**6.** A polyarylate according to any one of Claims 1 to 5, wherein the carboxyl value is 30 mole/ton or less and the quantity of residual alkali metals is less than 50 ppm.

**7.** A polyarylate according to any one of Claims 1 to 6, wherein the quantity of residual catalysts is less than 200 ppm.

**8.** A polyarylate according to any one of Claims 1 to 7, wherein the quantity of the residual of phenyl monomers and dicarboxylic acids are 1000 ppm or less, respectively.

**9.** A film produced by forming the polyarylate according to any one of Claims 1 to 8.

**10.** A film formed by a solvent casting method of the polyarylate according to any one of Claims 1 to 8.

**11.** A polyarylate film according to Claim 10, wherein the residual phenyl monomer and dicarboxylic acid are 1000 ppm or less, respectively.

**12.** A polyarylate film according to Claim 10 or 11, wherein the quantity of the residual solvent is less than 2000 ppm.

## INTERNATIONAL SEARCH REPORT

International application No.
PCT/JP98/04495

A. CLASSIFICATION OF SUBJECT MATTER
Int.Cl[6] C08G63/193, C08J5/18

According to International Patent Classification (IPC) or to both national classification and IPC

B. FIELDS SEARCHED

Minimum documentation searched (classification system followed by classification symbols)
Int.Cl[6] C08G63/16-63/21, C08J5/18

Documentation searched other than minimum documentation to the extent that such documents are included in the fields searched
Jitsuyo Shinan Koho 1926-1998 Toroku Jitsuyo Shinan Koho 1994-1998
Kokai Jitsuyo Shinan Koho 1971-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 3-168211, A (Unitika Ltd.), 22 July, 1991 (22. 07. 91), Page 1, lower left column, line 5 to lower right column, line 3 ; page 3, upper left column, line 19 to page 4, lower left column (Family: none) | 1-12 |
| A | JP, 3-28222, A (Minnesota Mining and Manufacturing Co.), 6 February, 1991 (06. 02. 91), Page 1, lower left column, lines 5 to 11 ; page 5, lower left column, lines 14 to 19 & US, 4967306, A | 1-12 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 December, 1998 (22. 12. 98) | 12 January, 1999 (12. 01. 99) |
| Name and mailing address of the ISA/ Japanese Patent Office | Authorized officer |
| Facsimile No. | Telephone No. |

Form PCT/ISA/210 (second sheet) (July 1992)